# EUROPEAN PATENT APPLICATION

(11) **EP 2 784 276 A1**
(43) Date of publication of application: **01.10.2014**
(21) Application number: 11876299.6
(22) Date of filing: 25.11.2011
(51) Int. Cl.: F01N 3/02, B01D 53/94

(54) **CONTROL DEVICE FOR INTERNAL COMBUSTION ENGINE**

(71) Applicant: Toyota Jidosha Kabushiki Kaisha, Toyota-shi, Aichi 471-8571 (JP)
(72) Inventor: SHIRAI, Akira, Toyota-shi Aichi 471-8571 (JP)
(74) Representative: Winter, Brandl, Fürniss, Hübner, Röss, Kaiser, Polte - Partnerschaft mbB
(86) International application number: PCT/JP2011/077189
(87) International publication number: WO 2013/076867

(57) **Abstract**

A control apparatus for an internal combustion engine (10) in the present invention includes a DPF (28) installed in an exhaust passage (16) and a DOC (26) installed in the exhaust passage (16) on the upstream side of the DPF (28). The control apparatus changes an engine control parameter so as to facilitate NO₂-based regeneration when it is determined that an operating state in which the NO₂-based regeneration speed is higher than a predetermined threshold value is established during operation of the internal combustion engine (10).

## Description

### Technical Field

The present invention relates to a control apparatus for an internal combustion engine, and more particular to a control apparatus for an internal combustion engine that is suitable for controlling the internal combustion engine which includes, in an exhaust passage, a particulate filter for trapping particulate matter.

### Background Art

So far, for example, Patent Document 1 discloses a diesel engine which actively performs a method (hereinafter, referred to as "NO₂-based regeneration) that uses the following oxidation reaction ((2C + 2NO₂ → CO₂ + 2NO) and/or (C + NO₂ → CO + NO)) using nitrogen dioxide (NO₂) to oxidizes and removes, using recirculated NOx, particulate matter (soot) trapped by a diesel particulate filter (DPF).

Including the above described document, the applicant is aware of the following documents as related art of the present invention.

Meanwhile, as a method for oxidizing and removing particulate matter accumulated on a particulate filter, there is known a method (hereinafter, referred to as "O₂-based regeneration") that uses the following oxidation reaction ((C + O₂ → CO₂) and/or (2C + O₂ → 2CO)) to oxidize and remove, using oxygen (O₂), particulate matter trapped by the particulate filter, besides the NO₂-based regeneration disclosed in Patent Document 1.

In order to efficiently perform the NO₂-based regeneration during operation of an internal combustion engine, it is required, as compared to the time of the normal combustion, to increase the amount of NO₂ supplied to a particulate filter, and to increase the temperature of the particulate filter albeit to a lower extent compared to the time of the O₂-based regeneration. The NO₂-based regeneration, however, requires a longer time to regenerate the particulate filter as compared to the O₂-based regeneration. It is therefore conceivable that when the NO₂-based regeneration is actively performed without sufficient consideration with respect to the operating state at the time of performance of the NO₂-based regeneration, the NO₂-based regeneration may be performed over a long period of time. As a result, this comes down to problems, such as the deterioration of exhaust emission performance due to an increase in NOx emission and the deterioration of fuel efficiency due to execution of, for example, an additional fuel injection to increase the temperature of the particulate filter.

In addition, due to increased regulation of exhaust gas in recent years, it is expected that from now on, reduction of exhaust emission will be required in broader operating regions than ever before. Because of this, it may be required to achieve a decrease in NOx emission by implementing, for example, enhancement of EGR (Exhaust Gas Recirculation) control in broader operating regions than ever before. As a result, it is anticipated that passive execution of the NO₂-based regeneration can not be expected under a situation in which during, for example, high speed traveling, the execution of the NO₂-based regeneration has been able to be expected without special consideration in the past. If such situation actually occurs, the frequency of execution of forcible O₂-based regeneration increases. This leads to problems such as the deterioration of fuel efficiency and the dilution of oil.

### Citation List

### Patent Documents

Patent Document 1: Japanese Rational Publication of International Patent Application No. 2011-511898
Patent Document 2: International Publication No. WO 02/066813
Patent Document 3: Japanese National Publication of International Patent Application No. 2011-511897

### Summary of Invention

The present invention has been made to solve the problem as described above, and has its object to provide a control apparatus for an internal combustion engine which can ensure the opportunity in which the NO₂-based regeneration is efficiently performed during operation while suppressing an increase in the amount of NOx emission and the deterioration of fuel efficiency as much as possible.

The present invention is a control apparatus for an internal combustion engine that includes: a particulate filter; NO₂ production means; NO₂-based regeneration speed estimation means; operating state determination means; and control parameter change means.

The particulate filter is installed in an exhaust passage of the internal combustion engine and traps particulate filter. NO₂ production means produces NO₂ in exhaust gas supplied to the particulate filter. NO₂-based regeneration speed estimation means estimates the speed of regeneration of the particulate filter using NO₂ (hereinafter, referred to as an "NO₂-based regeneration speed") during operation of the internal combustion engine. Operating state determination means determines whether or not an operating state in which the NO₂-based regeneration speed is higher than a predetermined threshold value is established during operation of the internal combustion engine. Control parameter change means changes an engine control parameter so that when the operation state in which the NO₂-based regeneration speed is higher than the threshold value is determined to be established by the operation state determination means, at least one of the amount of NO₂ supplied to the particulate filter and the temperature of the particulate filter is increased.

According to the present invention, by determining whether or not the operation state in which the NO₂-based regeneration speed is higher than the threshold value is established during operation of the internal combustion engine, the engine control parameter can be changed so as to facilitate the NO₂-based regeneration with selection of an operating state in which sufficient execution of NO₂-based regeneration can be expected. Therefore, the period of performing the aforementioned change in the engine control parameter for facilitating the NO₂-based regeneration can be prevented from becoming too long. This can ensure the opportunity in which the NO₂-based regeneration is efficiently performed during the operation while suppressing an increase in the amount of NOx emission and the deterioration of fuel efficiency as much as possible.

In addition, the present invention may further include first control parameter change prohibition means for, even when the operation state in which the NO₂-based regeneration speed is higher than the threshold value is established, prohibiting a change in the engine control parameter by the control parameter change means in a case in which an outside air temperature is lower than or equal to a predetermined value and/or an engine cooling water temperature is lower than or equal to a predetermined value.

This can ensure the opportunity in which the NO₂-based regeneration is efficiently performed during the operation while preventing a lack of performance of a heater of a vehicle due to facilitation of the NO₂-based regeneration at the time of low-temperature or preventing an occurrence of combustion deterioration of the internal combustion engine.

Moreover, the present invention may further include second control parameter change prohibition means for, even when the operation state in which the NO₂-based regeneration speed is higher than the threshold value is established, prohibiting a change in the engine control parameter by the control parameter change means in a case in which torque control is performed so that a torque of the internal combustion engine is maintained.

This can ensure the opportunity in which the NO₂-based regeneration is efficiently performed during the operation while preventing a torque shock from occurring due to facilitation of the NO₂-based regeneration during execution of the torque control.

Moreover, the present invention may further include third control parameter change prohibition means for, even when the operation state in which the NO₂-based regeneration speed is higher than the threshold value is established, prohibiting a change in the engine control parameter by the control parameter change means in a case in which a vehicle on which the internal combustion engine is mounted is traveling in an urban area.

This can ensure the opportunity in which the NO₂-based regeneration is efficiently performed during the operation while preventing an increase in the amount of NOx emission due to facilitation of the NO₂-based regeneration when the traveling in an urban area is done.

Moreover, the present invention may further include parameter change suspend means for suspending a change in the engine control parameter by the control parameter change means when the operation state in which the NO₂-based regeneration speed is higher than the threshold value has stopped being established during a period in which the change in the engine control parameter is being performed by the control parameter change means.

This allows the change of the engine control parameter for facilitating the NO₂-based regeneration to be performed only when an operating state in which sufficient execution of NO₂-based regeneration can be expected is more surely selected.

Furthermore, the operating state determination means in the present invention may determine that the operating state in which the NO₂-based regeneration speed is higher than the threshold value has been established when the temperature of the particulate filter is higher than a predetermined threshold value and the amount of accumulation of particulate matter in the particulate filter is larger than a predetermined threshold value and the amount of NO₂ flown into the particulate filter is larger than a predetermined threshold value.

This can favorably determine whether or not the operation state in which the NO₂-based regeneration speed is higher than the threshold value is established during the operation of the internal combustion engine.

### Brief Description of Drawings

Fig. 1 is a diagram for explaining a system configuration according to a first embodiment of the present invention;
Fig. 2 is a flowchart of a routine that is executed in the first embodiment of the present invention;
Fig. 3 is a block diagram that illustrates the outline of an NO₂-based regeneration speed model; and
Fig. 4 is a chart for explaining the effect of control of the NO₂-based regeneration according to the first embodiment of the present invention.

### Description of Embodiment

### First Embodiment

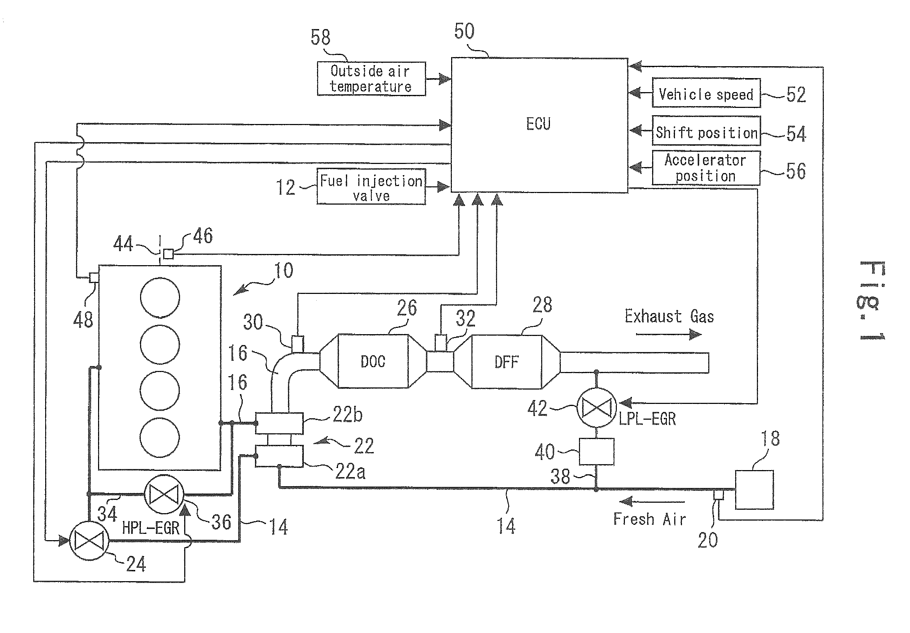

Fig. 1 is a diagram for explaining a system configuration according to a first embodiment of the present invention. The system shown in Fig. 1 includes an internal combustion engine 10. It is assumed herein that the internal combustion engine 10 is a four-cycle diesel engine (compression ignition internal combustion engine) 10 and is mounted in a vehicle to work as its power source. Although the internal combustion engine 10 of the present embodiment is of an in-line four cylinder type, the number and arrangement of cylinders in the internal combustion engine in the present invention are not limited to the foregoing.

A fuel injection valve 12 that directly injects fuel into the cylinder is installed in each cylinder of the internal combustion engine 10. The fuel injection valve 12 of each cylinder is connected to a shared common-rail (not illustrated in the drawings) to which a high pressure fuel which is pressurized by a supply pump (not illustrated in the drawings) is supplied. From this common-rail, the fuel is supplied to the fuel injection valve 12 of each cylinder. Each cylinder is in communication with an intake passage 14 and an exhaust passage 16.

An air cleaner 18 is provided in the vicinity of the inlet of the intake passage 14 of the internal combustion engine 10. An air flow meter 20 for detecting the amount of intake air is installed near the downstream of the air cleaner 18 in the intake passage 14. The air suctioned through the air cleaner 18 is compressed by a compressor 22a of a turbo-supercharger 22. The turbo-supercharger 22 includes a turbine 22b which is operated by exhaust energy of exhaust gas, and a compressor 22a which is integrally coupled to the turbine 22b is driven to rotate by the exhaust energy of the exhaust gas input to the turbine 22b. An intake throttle valve 24 is installed at a section on the downstream side of the compressor 22a in the intake passage 14.

The turbine 22b of the turbo-supercharger 22 is installed at some point in the exhaust passage 16. In the exhaust passage 16 on the downstream side of the turbine 22b, a diesel oxidation catalyst (DOC) 26 and a diesel particulate filter (DPF) 28 are installed in series in the order from the upstream side of exhaust gas to purify the exhaust gas. The DOC 26 has functions to not only oxidize and remove hydrocarbon (HC) and carbon monoxide (CO) but also to oxidize a part of nitrogen monoxide (NO) that is contained in the supplied exhaust gas to convert it into nitrogen dioxide (NO₂), under a condition in which oxygen (O₂) is present. The DPF 28 has a function to trap particulate matter (PM) that is composed of soot and the like and that is contained in the exhaust gas. The PM (specially, soot) trapped by the DPF 28 is oxidized and removed by execution of a regeneration process described later.

Moreover, a temperature sensor 30 for detecting the temperature of the exhaust gas that is flown into the DOC 26 (DOC inlet gas temperature) is installed in the exhaust passage 16 on the upstream side of the DOC 26, and a temperature sensor 32 for detecting the temperature of the exhaust gas that is flown into the DPF 28 (DPF inlet gas temperature) is installed in the exhaust passage 16 on the upstream side of the DPF 28.

Moreover, the system shown in Fig. 1 is provided with a high-pressure exhaust gas recirculation passage (HPL: High Pressure Loop) 34. The HPL 34 is configured to allow the exhaust passage 16 on the upstream side of the turbine 22b to be communicated with the intake passage 14 located downstream side of the compressor 22a. At some point of the HPL 34, an HPL-EGR valve 36 is disposed to adjust the amount of recirculated exhaust gas (EGR (Exhaust Gas Recirculation) gas) that flows back into the intake passage 14 through the HPL 34.

The system shown in Fig. 1 is further provided with a low-pressure exhaust gas recirculation passage (LPL: Low Pressure Loop) 38. The LPL 38 is configured to allow the exhaust passage 16 on the downstream side of the turbine 22b and the downstream side of the DPF 28 to be communicated with the intake passage 14 on the upstream side of the compressor 22a. There are installed at some points of the LPL 38 in the order from the upstream side of the flow of EGR gas, an EGR cooler 40 for cooling the EGR gas that flows through the LPL 38, and an LPL-EGR valve 42 for adjusting the amount of the EGR gas that flows back into the intake passage 14 through the LPL 38. The EGR cooler 40 is of water-cooled type using an engine cooling water that cools the main body of the internal combustion engine 10. The engine cooling water that is heated by the EGR gas in the EGR cooler 40 is supplied to a heater (not illustrated in the drawings) of the vehicle on which the internal combustion engine 10 is mounted.

A crank angle sensor 46 for detecting a crank angle and an engine speed is installed in the vicinity of a crankshaft 44. In addition, A water temperature sensor 48 for detecting the temperature of the engine cooling water is installed in the internal combustion engine 10.

Furthermore, the system of the present embodiment includes an ECU (Electronic Control Unit) 50. There are electrically connected to the ECU 50, various sensors for detecting the operating state of the internal combustion engine 10, such as the air flow meter 20, the temperature sensors 30 and 32, the crank angle sensor 46, the water temperature sensor 48 and the like that are described above. In addition, there are electrically connected to the ECU 50, a vehicle speed sensor 52 for detecting the speed of the vehicle (not illustrated in the drawings) on which the internal combustion engine 10 is mounted, a shift position sensor 54 for detecting a shift position of a transmission (not illustrated in the drawings) that is combined with the internal combustion engine 10, an accelerator position sensor 56 for detecting the depression amount (accelerator position) of an accelerator pedal of the vehicle, and an outside air temperature sensor 58 for detecting the outside air temperature. Further, there are connected to the ECU 50, various actuators for controlling the operation of the internal combustion engine 10, such as the fuel injection valve 12, the intake throttle valve 24, the HPL-EGR valve 36, the LPL-EGR valve 42 and the like that are described above. The ECU 50 controls the operating state of the internal combustion engine 10 by actuating each actuator on the basis of the output of each sensor and predetermined programs.

As methods of forcibly regenerating the aforementioned DPF 28 by oxidizing and removing the PM (soot) trapped by the DPF 28, there are a method that is forcibly performed using O₂ (hereinafter, referred to as "O₂-based regeneration") and a method using NO₂ (hereinafter, referred to as "NO₂-based regeneration").

More specifically, according to the O₂-based regeneration, when the accumulation amount of soot (PM) to the DPF 28 has reached a predetermined threshold value during operation, the soot (PM) is oxidized and removed using the following oxidation reaction ((C + O₂ → CO₂) and/or (2C + O₂ → 2CO)) by increasing the exhaust gas temperature by use of, for example, executing an after-injection after a main injection to forcibly increase the temperature (floor temperature) of the DPF 28 so as to be higher than or equal to a predetermined regeneration target temperature (for example, 600 degrees Celsius). NO contained in the exhaust gas discharged from the internal combustion engine 10 is oxidized when passing through the DOC 26, and NO₂ is produced. According to the NO₂-based regeneration, soot (PM) is oxidized and removed using the following oxidization reaction of soot ((C + 2NO₂ → CO₂ + 2NO) and/or (C + NO₂ → CO + NO)) by increasing the amount of NO₂ supplied to the DPF 28 by use of adjustment of an engine control parameter (fuel injection parameter (such as fuel injection timing or pilot injection amount) or the amount of EGR gas) for increasing NOx (NO) discharged from the cylinders, and by increasing the temperature (floor temperature) of the DPF 28 so as to be higher than or equal to a predetermined temperature (about 300 to 400 degrees Celsius) albeit to a relatively lower extent compared to the time of the O₂-based regeneration.

In order to efficiently perform the NO₂-based regeneration during operation of the internal combustion engine 10, as already described, it is required, as compared to the time of the normal combustion, to increase the amount of NO₂ supplied to the DPF 28, and to increase the temperature of the DPF 28 albeit to a lower extent compared to the time of the O₂-based regeneration. However, the NO₂-based regeneration requires a longer time to regenerate the DPF 28 as compared to the O₂-based regeneration. It is therefore conceivable that when the NO₂-based regeneration is actively performed without sufficient consideration with respect to the operating state at the time of performance of the NO₂-based regeneration, the NO₂-based regeneration may be performed over a long period of time. As a result, this comes down to problems, such as the deterioration of exhaust emission performance due to an increase in NOx emission and the deterioration of fuel efficiency due to execution of, for example, an additional fuel injection to increase the temperature of the DPF 28.

In addition, due to increased regulation of exhaust gas in recent years, it is expected that from now on, reduction of exhaust emission will be required in broader operating regions than ever before. Because of this, it may be required to achieve a decrease in NOx emission by implementing, for example, enhancement of EGR (Exhaust Gas Recirculation) control using HPL or LPL in broader operating regions than ever before. As a result, it is anticipated that passive execution of the NO₂-based regeneration can not be expected under a situation in which during, for example, high speed traveling, the execution of the NO₂-based regeneration has been able to be expected without special consideration in the past. If such situation actually occurs, the frequency of execution of forcible O₂-based regeneration increases. This leads to problems such as the deterioration of fuel efficiency and the dilution of oil.

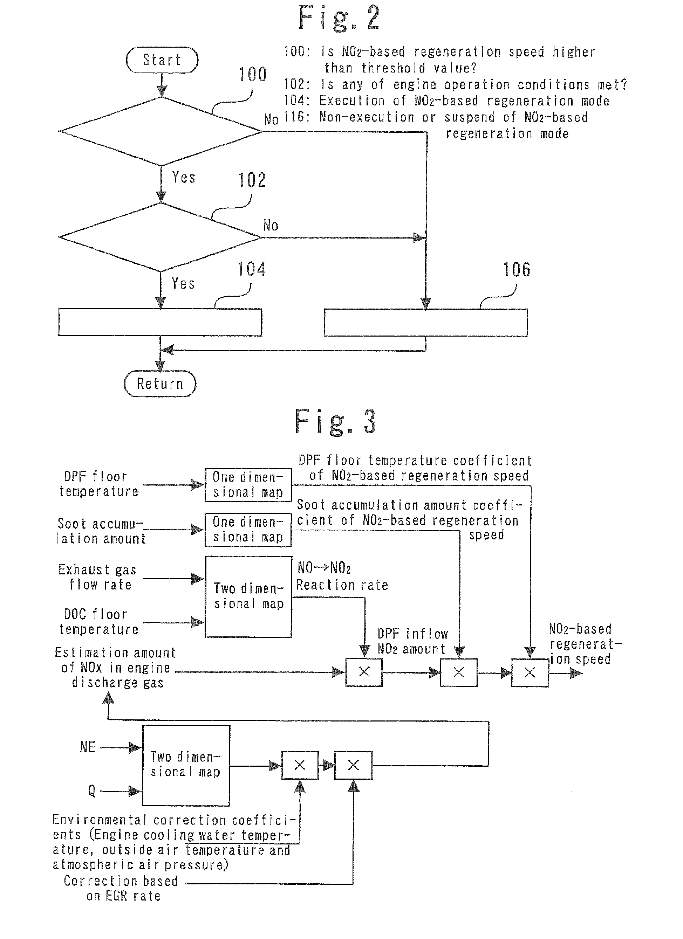

Accordingly, the present embodiment uses an NO₂-based regeneration speed model described later with reference to Fig. 3 to determine whether or not an operating state in which the speed of NO₂-based regeneration (hereafter, referred to as an "NO₂-based regeneration speed") is larger than a predetermined threshold value is established during operation of the internal combustion engine 10. On that basis, only when such operating state is established and the following predetermined engine operation conditions subject to prohibition of NO₂-based regeneration are not established, an NO₂-based regeneration mode is executed which facilitates NO₂-based regeneration compared to the time of the normal combustion that uses an identical operating region (more specifically, which increases the amount of NO₂ supplied to the DPF 28 and raises the floor temperature of the DPF 28).

One example of the predetermined engine operation conditions subject to prohibition of NO₂-based regeneration is the time of low-temperature when the outside air temperature and/or the engine cooling water temperature is lower than or equal to a predetermined value. Further, another example of the engine operation conditions is the time of execution of torque control to maintain the torque of the internal combustion engine 10 (for example, the time of idling operation or the time of cruise control at which the torque of the internal combustion engine 10 is made constant to maintain the vehicle speed). Furthermore, the time of traveling in an urban area can be taken as another example of the engine operation conditions. That is to say, according to the present embodiment, when one of the operation conditions is established, the execution of the NO₂-based regeneration mode for facilitating the NO₂-based regeneration is prohibited even if the NO₂-based regeneration speed is larger than the aforementioned threshold value during operation of the internal combustion engine 10, that is, even if the engine 10 is in an operating state in which the NO₂-based regeneration can be sufficiently executed.

Fig. 2 is a flowchart that illustrates a control routine executed by the ECU 50 to implement control concerning the NO₂-based regeneration according to the first embodiment of the present invention. It is assumed that the present routine is repeatedly executed for each predetermined control period.

In the routine shown in Fig. 2, first, it is determined whether or not the NO₂-based regeneration speed is higher than a predetermined threshold value (step 100). The threshold value in present step 100 is set in advance as a value for judging whether or not an operating state in which the NO₂-based regeneration can be expected to be executed sufficiently (that is, in a short time) during operation of the internal combustion engine 10 is established (arrived).

Fig. 3 is a block diagram that illustrates the outline of an NO₂-based regeneration speed model.

The NO₂-based regeneration speed model shown in Fig. 3 is a model that calculates the NO₂-based regeneration speed (the speed of regeneration of the DPF 28, (that is, the speed of oxidation of soot (PM) that results from the effect of the NO₂-based regeneration) on the basis of the floor temperature of the DPF 28, the amount of soot accumulation in the DPF 28, and the amount of NO₂ flown into the DPF 28. Hereinafter, each constituent element of the NO₂-based regeneration speed model will be described in detail.

As the DPF floor temperature rises, the NO₂-based regeneration speed increases. Accordingly, in the NO₂-based regeneration speed model, as shown in Fig. 3, a DPF floor temperature coefficient concerning the NO₂-based regeneration speed is calculated on the basis of the present DPF floor temperature, using an one-dimensional map that defines the DPF floor temperature coefficient so as to increase with a rise in the DPF floor temperature. It is noted that the DPF floor temperature itself can be calculated, for example, on the basis of a DPF inlet gas temperature detected by the temperature sensor 32 or on the basis of the operating state of the internal combustion engine 10 (engine speed, and engine load (fuel injection amount)).

Moreover, as the amount of soot accumulation in the DPF 28 increases, the NO₂-based regeneration speed increases. Accordingly, in the NO₂-based regeneration speed model, as shown in Fig. 3, a soot accumulation amount coefficient concerning the NO₂-based regeneration speed is calculated on the basis of the present soot accumulation amount, an using one-dimensional map that defines the soot accumulation amount coefficient so as to increase with an increase in the soot accumulation amount. It is noted that the soot accumulation amount itself can be estimated, for example, on the basis of an operation record of the internal combustion engine 10 (engine speed, torque, air-fuel ratio and the like) or the difference between pressures before and after the DPF (DPF differential pressure).

Furthermore, according to the NO₂-based regeneration speed model, as shown in Fig. 3, a DPF inflow NO₂ amount is calculated on the basis of the product of the rate of reaction (conversion rate) from NO to NO₂ as a result of the oxidation in the DOC 26 and the estimation amount of NO₂ in the exhaust gas discharged from the cylinders. The aforementioned rate of reaction from NO to NO₂ increases with an increase in the exhaust gas flow rate, or with an increase in the DOC floor temperature. Accordingly, the rate of reaction is calculated on the basis of the present exhaust gas flow rate and DOC floor temperature, using a two-dimensional map that defines the rate of reaction so as to increase with an increase in the exhaust gas flow rate and so as to increase with a rise in the DOC floor temperature. In addition, the estimation amount of NOx in the exhaust gas discharged from the cylinders is based on the value of a two-dimensional map that defines the estimation amount of NOx in a relation with the engine speed NE and the fuel injection amount Q, and is calculated by multiplying the aforementioned value by each of predetermined environmental correction coefficients (correction coefficients based on the engine cooling water temperature, the outside air temperature and the atmospheric air pressure) and a predetermined EGR ratio correction coefficient. It is noted that the aforementioned exhaust gas flow rate itself can be obtained on the basis of, for example, the intake air amount detected by the air flow meter 20, and the DOC floor temperature itself can be calculated, for example, on the basis of the DOC inlet gas temperature detected by the temperature sensor 30.

Further, according to the NO₂-based regeneration speed model shown in Fig. 3, the NO₂-based regeneration speed is calculated as the product of the DPF floor temperature coefficient, the soot accumulation amount coefficient and the DPF inflow NO₂ amount that are calculated as described above. More specifically, the NO₂-based regeneration speed is calculated as a value that becomes higher with each increase in these parameters, that is to say, the DPF floor temperature coefficient, the soot accumulation amount coefficient and the DPF inflow NO₂ amount. In other words, it can be said that a state in which the NO₂-based regeneration speed is higher than the threshold value is a state in which: the DPF floor temperature is high than a predetermined threshold value; the soot accumulation amount is larger than a predetermined threshold value; and the DPF inflow NO₂ amount is larger than a predetermined threshold value. In addition, the time of vehicle traveling when the internal combustion engine 10 is in a high-load state, more specifically, such as the time of high-speed traveling, the time of uphill traveling, or the time of acceleration of the vehicle, corresponds to a concrete example of the state in which the NO₂-based regeneration speed is higher than the threshold value.

In the routine shown in Fig. 2, if it is determined in step 100 that the NO₂-based regeneration speed that is estimated by the NO₂-based regeneration speed model is higher than the aforementioned threshold value, that is to say, if it can be judged that an operating state in which the NO₂-based regeneration is sufficiently executed has been established (arrived) during operation of the internal combustion engine 10, it is then determined whether or not an engine operation condition that does not require many trade-offs with respect to the execution of the NO₂-based regeneration mode is met (step 102). Specifically, in present step 102, it is judged whether or not the present operation condition does not correspond to any of the predetermined engine operation conditions subject to prohibition of NO₂-based regeneration that are already described. More specifically, in present step 102 it is judged: whether or not the time of low-temperature subject to prohibition of NO₂-based regeneration has not come on the basis of the outside air temperature and the engine cooling water temperature; whether or not the time of execution of the torque control (the time of idling operation or the time of cruise control) has not come; and whether or not the time of traveling in an urban area has not come on the basis of the vehicle speed (or, for example, the behavior of exhaust gas temperature). However, the determination of present step 102 is not limited to the judgments exemplified as above, and in present step 102 determination as to whether or not an operating state suitable for execution of the NO₂-based regeneration mode is established is broadly executed on the basis of the combination of parameters such as the DOC inlet gas temperature, the DPF inlet gas temperature, the vehicle speed, the fuel injection amount, the engine speed and the gear positions of the transmission.

If the determination of step 102 becomes affirmatives established following the affirmative determination of step 100, the NO₂-based regeneration mode is executed (step 104). The NO₂-based regeneration mode, as already described, is an operation mode for facilitating the NO₂-based regeneration (for increasing the NO₂-based regeneration speed) compared to the time of the normal combustion that uses an identical operating region (more specifically, an operation mode for increasing the amount of NO₂ supplied to the DPF 28 and for raising the floor temperature of the DPF 28).

The NO₂-based regeneration mode can be implemented by, for example, changing the engine control parameters compared to that at the time of the normal combustion as follows. More specifically, when transitioning to the NO₂-based regeneration mode, for example, a control map for a predetermined engine control parameter (EGR gas amount or fuel injection parameter) is switched from a control map used at the time of the normal combustion mode. In detail, by switching such control map, the amount of EGR gas using the LPL-EGR and/or HPL-EGR is decreased in order to increase the amount of NOx discharged from the cylinders (as one example, the introduction of the EGR gas using the LPL-EGR and/or HPL-EGR is stopped). In addition, in order to raise the floor temperature of the DPF 28 to a predetermined value (300-400 degrees Celsius) or more that is required at the time of NO₂-based regeneration and to increase the amount of NOx discharged from the cylinders, the control map is switched to optimize the fuel injection parameter so that a crank angle position at which combustion is generated is moved to the retard side compared to that at the time of the normal combustion. Specifically, for example, the fuel injection timing is retarded with respect to the value at the time of the normal combustion, and the amount of pilot injection is increased to suppress the deterioration of combustion in association therewith. Alternatively, in order to raise the exhaust gas temperature, the control map is switched so that an after-injection is executed.

Further, in the NO₂-based regeneration mode, feedback control for at least one of the DPF floor temperature, the DOC floor temperature and the NOx emission amount may be executed in order to maintain high the NO₂-based regeneration speed. Such feedback control can, for example, be executed by adjusting the exhaust gas temperature with a change in the amount of the after-injection and the fuel injection timing (further, by adjusting the NOx emission amount). Moreover, if a combustion model is installed in an ECU of an internal combustion engine and the operation of the internal combustion engine can be controlled on the basis of the combustion model, the following method may be used. More specifically, in terms of how the NO₂-based regeneration speed can be raised while suppressing the deterioration of combustion as much as possible, the combination of the engine control parameters that is capable of obtaining the optimum exhaust gas temperature (for example, the EGR gas amount and the fuel injection parameter) may be fixed using the aforementioned combustion model. Alternatively, if such a sophisticated combustion model is not installed, the relation of each change amount of the fuel efficiency, the NOx emission amount and the exhaust gas temperature with respect to a change in the engine control parameters (that is, sensitivity coefficients of the engine control parameters with respect to the fuel efficiency and the like) may be installed in advance as a map or a curve for every engine control parameter, in each operating region of the internal combustion engine. Based on such relation of the map or the like, a control value of each engine control parameter at the time of the NO₂-based regeneration mode may be fixed.

On the other hand, in the routine shown in Fig. 2, if the aforementioned determination of step 100 or 102 is negative, the NO₂-based regeneration mode is not executed (is prohibited), or if the aforementioned determination of step 100 or 102 has become negative during execution of the NO₂-based regeneration mode, the NO₂-based regeneration mode is suspended (step 106).

According to the routine shown in Fig. 2 described so far, only if the NO₂-based regeneration speed is higher than the aforementioned threshold value and an engine operation condition that does not require many trade-offs with respect to the execution of the NO₂-based regeneration mode is met, the NO₂-based regeneration mode for facilitating the NO₂-based regeneration is executed. In this manner, the above described routine constantly judge whether or not an operating state in which the NO₂-based regeneration can be executed sufficiently during operation of the internal combustion engine 10 is established. Then, only if it is recognized that an operating state in which sufficient effect of the NO₃-based regeneration can be expected to be promptly obtained has been established and if an engine operation condition that adversely affects the engine 10 is not met, the transition to the NO₂-based regeneration mode is permitted, and thereby, the engine control parameters are changed so as to facilitate the NO₂-based regeneration as much as possible. As described above, according to the method of the present embodiment, since the NO₂-based regeneration mode is executed only in a sufficient operating state concerning the NO₂-based regeneration that is detected during operation of the internal combustion engine 10 (an operating state in which the NO₂-based regeneration can be executed in a short time), the execution period of the NO₂-based regeneration mode can be prevented from becoming too long. This can ensure the opportunity in which the NO₂-based regeneration is efficiently performed during operation while suppressing an increase in the amount of NOx emission and the deterioration of fuel efficiency as much as possible.

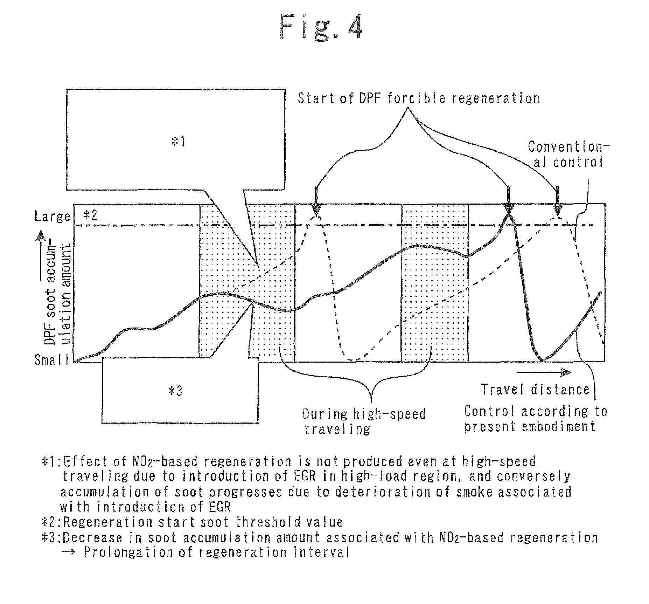

Fig. 4 is a chart for explaining the effect of control of the NO₂-based regeneration according to the first embodiment of the present invention. It is noted that the waveform represented "Conventional control" by the broken line in Fig. 4 shows one to which the control according to the present embodiment is not applied.

In the future, in order to address exhaust emission regulations for a vehicle traveling state (off-cycle state) that is out of statutory mode conditions in the exhaust emission regulations (for example, the NEDC mode conditions in Europe), it is anticipated that the operating region in which EGR control is executed for the purpose of reduction in the NOx emission amount will be extended to a region on the higher load side. As a result of this, at the time of high-speed traveling or the like in which an advantageous effect of the NO₂-based regeneration has been expected to be obtained due to a relatively high exhaust gas temperature in the past, the effect of the NO₂-based regeneration may not be sufficiently obtained due to a decrease in the amount of NOx discharged from the cylinders. In addition to that, smoke becomes easy to be discharged by introducing the EGR gas at the time of high-load operation, and the accumulation of soot in the DPF 28 therefore becomes rather easy to progress at the time of high-speed traveling as shown by the broken line in Fig. 4.

In contrast, in order to facilitate the effect of the NO₂-based regeneration in an operating state such as a high-load operation of the internal combustion engine, in which the NO₂-based regeneration speed is high, the present embodiment changes the engine control parameters within a range in which the deterioration of NOx emission and fuel efficiency is prevented as much as possible, on the condition that an operation condition that requires the trade-off is not met. This efficiently produces the effect of the NO₂-based regeneration at the time of high-speed traveling (the time of high-load operation of the internal combustion engine 10) in which high NO₂-based regeneration speed can be originally expected to be achieved, as shown by the solid line in Fig. 4. As a result, if the amount of soot accumulation is decreased by the NO₂-based regeneration at the time of high-speed traveling, a timing in which the amount of soot accumulation increases to a regeneration start soot threshold value at which forcible O₂-based regeneration is started can be delayed. As just described, according to the control of the present embodiment, an operating state capable of efficiently executing the NO₂-based regeneration during operation of the internal combustion engine 10 is obtained, and the opportunity of sufficient execution of the NO₂-based regeneration can be ensured. Therefore, the interval of regeneration of the DPF 28 using forcible O₂-based regeneration can be extended. Consequently, the risk of fuel efficiency deterioration and oil dilution as a result of execution of forcible O₂-based regeneration can be decreased.

In addition, according to the aforementioned routine, even if the NO₂-based regeneration speed estimated by the NO₂-based regeneration speed model is higher than the aforementioned threshold value, transitioning to the NO₂-based regeneration mode is prohibited when any of the aforementioned predetermined engine operation conditions subject to prohibition of NO₂-based regeneration is met. Such control that prohibits the transitioning to the NO₂-based regeneration mode at the time of low-temperature produces the following advantageous effects. More specifically, if the amount of EGR gas is decreased or the introduction of EGR is ceased as a result of the transitioning to the NO₂-based regeneration mode at the time of low-temperature, heat becomes hard to be obtained when the engine cooling water flows through the EGR cooler 40. As a result of this, there is a concern that the performance of a heater of the vehicle may be insufficient. Moreover, if the retard of the fuel injection timing is executed as a result of the transitioning to the NO₂-based regeneration mode at the time of low-temperature, there is a concern that the combustion may be deteriorated at the time of low-temperature. In contrast, the lack of heater performance and the deterioration of fuel efficiency can be prevented at the time of low-temperature by prohibiting the transitioning to the NO₂-based regeneration mode even when the operating state in which sufficient NO₂-based regeneration is expected has come.

Further, the transitioning to the NO₂-based regeneration mode is prohibited at the time of execution of the torque control that maintains engine torque at a constant value, such as the time of idling operation and the time of cruise control, and thereby a torque shock can be prevented from occurring due to a change in the engine control parameters for facilitating the NO₂-based regeneration. Moreover, the transitioning to the NO₂-based regeneration mode is prohibited at the time of traveling in an urban area, and thereby the amount of NOx emission can be prevented from increasing due to facilitation of the NO₂-based regeneration when the traveling in an urban area is done. Furthermore, according to the control of the present embodiment, if the aforementioned prohibition condition concerning the NO₂-based regeneration is met, the implementation of the prohibition condition has priority over ensuring the opportunity of the NO₂-based regeneration. That is to say, ensuring the opportunity of the NO₂-based regeneration by the control of the present embodiment can be permitted consistently under a situation in which there is no concern about any adverse effects.

Furthermore, according to the aforementioned routine, if the NO₂-based regeneration speed decreases to or below the aforementioned threshold value after the NO₂-based regeneration mode is started, or if any of the engine operation conditions subject to prohibition of NO₂-based regeneration is met, the execution of the NO₂-based regeneration mode is not maintained until the amount of soot accumulation decreases to a target value, but the execution is immediately suspended. Such control more definitely ensures the execution of the NO₂-based regeneration that is limited at efficient operating states and the execution of the NO₂-based regeneration that is limited under engine operation conditions in which there is no concern about any adverse effects. Therefore, an increase in the amount of NOx emission or the deterioration of fuel efficiency due to maintaining the NO₂-based regeneration under insufficient situations can be more surely prevented. In addition, adverse effects such as the lack of performance of the heater can be more surely prevented from occurring due to maintaining the NO₂-based regeneration under the aforementioned engine operation conditions subject to prohibition.

It is noted that in the first embodiment, which has been described above, the DPF 28 corresponds to the "particulate filter" according to the present invention; and the DOC 26 corresponds to the "NO₂ production means" according to the present invention. In addition, the ECU 50 calculates the NO₂-based regeneration speed using the NO₂-based regeneration speed model shown in Fig. 3, whereby the "NO₂-based regeneration speed estimation means" according to the present invention is realized; the ECU 50 executes the aforementioned determination of step 100, whereby the "operating state determination means" according to the present invention is realized; and the ECU 50 executes the aforementioned processing of step 104, whereby the "control parameter change means" according to the present invention is realized.

Moreover, in the above described first embodiment, the ECU 50 executes the aforementioned processing of step 106 when the aforementioned determination of step 102 is not established, whereby the "first control parameter change prohibition means" according to the present invention is realized.

Moreover, in the above described first embodiment, the ECU 50 executes the aforementioned processing of step 106 when the aforementioned determination of step 102 is not established, whereby the "second control parameter change prohibition means" according to the present invention is realized.

Moreover, in the above described first embodiment, the ECU 50 executes the aforementioned processing of step 106 when the aforementioned determination of step 102 is not established, whereby the "third control parameter change prohibition means" according to the present invention is realized.

Furthermore, in the above described first embodiment, the ECU 50 executes the aforementioned processing of step 106 when the aforementioned determination of step 100 or 102 is negative, whereby the "parameter change suspend means" according to the present invention is realized.

### Description of symbols

- 10: internal combustion engine
- 12: fuel injection valve
- 14: intake passage
- 16: exhaust passage
- 20: air flow meter
- 22: turbo-supercharger
- 26: diesel oxidation catalyst (DOC)
- 28: diesel particulate filter (DPF)
- 30, 32: temperature sensor
- 34: high-pressure exhaust gas recirculation passage (HPL)
- 36: HPL-EGR valve
- 38: low-pressure exhaust gas recirculation passage (LPL)
- 40: EGR cooler
- 42: LPL-EGR valve
- 44: crankshaft
- 46: crank angle sensor
- 48: water temperature sensor
- 50: ECU (Electronic Control Unit)
- 52: vehicle speed sensor
- 54: shift position sensor
- 56: accelerator position sensor
- 58: outside air temperature sensor

## Claims

1. A control apparatus for an internal combustion engine, comprising:
a particulate filter that is installed in an exhaust passage of the internal combustion engine and traps particulate filter;
NO₂ production means for producing NO₂ in exhaust gas supplied to the particulate filter;
NO₂-based regeneration speed estimation means for estimating a speed of regeneration of the particulate filter using NO₂ (hereinafter, referred to as an "NO₂-based regeneration speed") during operation of the internal combustion engine;
operating state determination means for determining whether or not an operating state in which the NO₂-based regeneration speed is higher than a predetermined threshold value is established during operation of the internal combustion engine; and
control parameter change means for changing an engine control parameter so that when the operation state in which the NO₂-based regeneration speed is higher than the threshold value is determined to be established by the operation state determination means, at least one of an amount of NO₂ supplied to the particulate filter and a temperature of the particulate filter is increased.

2. The control apparatus for the internal combustion engine according to claim 1, further comprising:
first control parameter change prohibition means for, even when the operation state in which the NO₂-based regeneration speed is higher than the threshold value is established, prohibiting a change in the engine control parameter by the control parameter change means in a case in which an outside air temperature is lower than or equal to a predetermined value and/or an engine cooling water temperature is lower than or equal to a predetermined value.

3. The control apparatus for the internal combustion engine according to claim 1 or 2, further comprising:
second control parameter change prohibition means for, even when the operation state in which the NO₂-based regeneration speed is higher than the threshold value is established, prohibiting a change in the engine control parameter by the control parameter change means in a case in which torque control is performed so that a torque of the internal combustion engine is maintained.

4. The control apparatus for the internal combustion engine according to any one of claims 1 to 3, further comprising:
third control parameter change prohibition means for, even when the operation state in which the NO₂-based regeneration speed is higher than the threshold value is established, prohibiting a change in the engine control parameter by the control parameter change means in a case in which a vehicle on which the internal combustion engine is mounted is traveling in an urban area.

5. The control apparatus for the internal combustion engine according to any one of claims 1 to 4, further comprising:
parameter change suspend means for suspending a change in the engine control parameter by the control parameter change means when the operation state in which the NO₂-based regeneration speed is higher than the threshold value has stopped being established during a period in which the change in the engine control parameter is being performed by the control parameter change means.

6. The control apparatus for the internal combustion engine according to any one of claims 1 to 5,
wherein the operating state determination means determines that the operating state in which the NO₂-based regeneration speed is higher than the threshold value has been established when the temperature of the particulate filter is higher than a predetermined threshold value and an amount of accumulation of particulate matter in the particulate filter is larger than a predetermined threshold value and an amount of NO₂ flown into the particulate filter is larger than a predetermined threshold value.
